## Europäisches Patentamt

## European Patent Office

## Office européen des brevets

(11) Veröffentlichungsnummer: **0 098 327**
**B1**

# EUROPÄISCHE PATENTSCHRIFT

(45) Veröffentlichungstag der Patentschrift:
05.11.86

(21) Anmeldenummer: 82106280.9

(22) Anmeldetag: 14.07.82

(51) Int. Cl.⁴: **A 01 D 41/12**

(54) Sammelbehälter für eine Erntebergungsmaschine zur Aufnahme von schüttbarem Erntegut.

(43) Veröffentlichungstag der Anmeldung:
18.01.84 Patentblatt 84/3

(45) Bekanntmachung des Hinweises auf die Patenterteilung:
05.11.86 Patentblatt 86/45

(84) Benannte Vertragsstaaten:
BE DE FR GB IT SE

(56) Entgegenhaltungen:
DE-A-1 482 855
DE-A-2 111 168
DE-B-2 834 729
DE-U-1 966 426

(73) Patentinhaber: DEERE & COMPANY, 1 John Deere Road, Moline Illinois 61265 (US)

(72) Erfinder: Rohwedder, H., Rosenstrasse 12, D-6660 Zweibrücken (DE)

(74) Vertreter: Sartorius, Peter, DEERE & COMPANY European Office, Patent Department Postfach 503 Steubenstrasse 36- 42, D-6800 Mannheim 1 (DE)

EP 0 098 327 B1

LIBER, STOCKHOLM 1986

**Beschreibung**

Die Erfindung bezieht sich auf einen Sammelbehälter für eine Erntebergungsmaschine zur Aufnahme von schüttbarem Erntegut, insbesondere für Mähdrescher, mit zwei an die obere Begrenzung des Sammelbehälters angeschlossenen, gegenüberliegenden, eine obere Öffnung des Sammelbehälters abdeckenden Wandfortsetzungen zur Vergrößerung des Sammelbehälterinhalts, die seitlich durch zueinander ausgerichtete Seitenteile begrenzt sind, wobei die Wandfortsetzungen zwischen einer unteren Lage und einer oberen Lage verschwenkbar sind.

Es ist bereits ein Korntank bekannt (DE-U-1 966 426), dessen Oberfläche mit hochklappbaren bzw. abnehmbaren Abdeckblechen versehen ist, wobei mindestens zwei der Abdeckbleche in eine vertikale oder annähernd vertikale Lage verschwenkbar sind und in dieser Stellung Begrenzungsflächen einer kastenförmig auf dem Korntank sitzenden räumlichen Erweiterung bilden. Die auf der Oberfläche angeordneten Abdeckbleche weisen ebenfalls gegenüberliegende Stirnkanten auf, die einen relativ großen Abstand aufweisen, so daß bei Erweiterung des Korntankes eine nach oben zeigende Öffnung im Korntank bleibt. Somit wird nicht gewährleistet, daß in jeder Füllphase des Sammelbehälters der Sammelbehälter vollständig verschlossen gehalten werden kann.

Es ist bereits ein Mähdrescherkorntank mit einem an den Körnerelevator anschließenden Beladeförderer im oberen Tankbereich bekannt (DE-B-2 834 729), der um eine etwa waagerechte Querachse zwischen einer unteren Lage und einer oberen Lage verschwenkbar ist. An den beiden gegenüberliegenden Seitenwänden des Korntanks sind Wandfortsetzungen zur Vergrößerung des Tankinhalts vorgesehen, die ebenfalls zwischen einer unteren Lage und einer oberen Lage verschwenkbar sind. Hierzu ist der Beladeförderer über Lenker mit der entsprechenden Wandfortsetzung gelenkig verbunden. Durch die Verstellbarkeit der Wandfortsetzungen können diese zur Vergrößerung der Füllhöhe des Korntanks beim Befüllungsvorgang über den Beladeförderer mit nach oben verschwenkt werden, der stets auf der Oberfläche des Erntegutes aufliegt. Da die Wandfortsetzungen in ihrer oberen Endlage seitlich eine dreieckförmige Öffnung mit der Unterkante der nicht verstellbaren Seitenwand des Sammelbehälters bilden, kann je nach Stellung des Mähdreschers Erntegut durch diese Öffnung verlorengehen.

Aus der DE-A-2 111 168 ist ein Sammelbehälter bekannt, dessen obere Öffnung über eine Platte abgedeckt ist, die etwas größer ist als die Öffnung. Die Platte ist an der Oberkante der feststehenden Deckwand gelenkig angeschlossen und läßt sich über eine Verstellvorrichtung in die gewünschte Lage verschwenken. Die Platte, die zur Abdeckung der Öffnung dient, weist dreieckförmig ausgebildete Seitenteile auf, die über eine Querwand miteinander verbunden sind, so daß die Klappe allseitig den Sammelbehälter verschließt. Mit der verstellbaren Klappe läßt sich das Gesamtvolumen des Sammelbehälters nur geringfügig vergrößern.

Demgegenüber liegt der Erfindung die Aufgabe zugrunde, die verstellbaren, gegenüberliegenden Wandfortsetzungen des Sammelbehälters derart auszubilden, daß in jeder Füllphase des Sammelbehälters der Sammelbehälter verschlossen bleibt. Diese Aufgabe ist dadurch gelöst worden, daß die beiden Wandfortsetzungen und daran die angeschlossenen Seitenteile sich im Bereich ihrer Stirnkanten überlappen und die eine Wandfortsetzung sich gegen die andere Wandfortsetzung anlehnt bzw. abstützt. Durch die vorteilhafte Ausbildung der beiden gegenüberliegenden Wandfortsetzungen wird in jeder Stellphase der Wandfortsetzungen und der daran angeschlossenen Seitenteile der Sammelbehälter verschlossen gehalten, so daß kein Erntegut entweichen kann, auch dann nicht, wenn der Schüttkegel des Erntegutes die obere Begrenzung des Sammelbehälters überschritten hat. Hierzu ist es vorteilhaft, daß sich die eine Wandfortsetzung auf der anderen Wandfortsetzung dichtend abstützt. Ferner ist es vorteilhaft, daß eine jede Wandfortsetzung durch zwei parallel zueinander verlaufende, mit der jeweiligen Wandfortsetzung verschwenkbare Seitenteile begrenzt ist, wobei die Seitenteile der einen Wandfortsetzung an den Seitenteilen der anderen Wandfortsetzung vorbeischwenkbar sind, und daß die Seitenteile parallel zu den zugeordneten Seitenwandteilen des Sammelbehälters verlaufen und an diesen vorbeischwenkbar sind.

Nach einem weiteren Merkmal der Erfindung ist es vorteilhaft, daß jedes der beiden Seitenteile der einen Wandfortsetzung im Bereich seiner Stirnkante mit der Unterseite dieser Wandfortsetzung eine schlitzförmige oder dreieckförmige Aussparung bildet, die zur Aufnahme der Stirnkante der gegenüberliegenden Wandfortsetzung dient. Durch die Verwendung eines Schlitzes im Bereich der Stirnkante der Seitenteile und der Wandfortsetzung, die zur Aufnahme des vorderen Endes der gegenüberliegenden Wandfortsetzung dient, erhält man eine einwandfreie Zwangsführung für die beiden Wandfortsetzungen und die Gewährleistung, daß die beiden Wandfortsetzungen immer gemeinsam verstellt werden, auch dann, wenn der Schüttkegel nur gegen eine Wandfortsetzung zur Anlage kommt, z. B. dann, wenn der Mähdrescher am Hang arbeitet. Es wird also stets gewährleistet, daß die beiden Wandfortsetzungen ständig gegeneinander anliegen und sich die eine Wandfortsetzung nicht von der anderen Wandfortsetzung fortbewegen kann, so daß der Sammelbehälter stets verschlossen bleibt, gleich in welcher Lage sich der Sammelbehälter befindet. Da die beiden Wandfortsetzungen ständig gegeneinander anliegen, kann der Raum oberhalb der oberen Begrenzung des Sammelbehälters, der durch die Wandfortsetzungen gebildet wird, vollständig über eine Befüllungsvorrichtung mit Erntegut gefüllt werden, so daß der Sammelbehälter auch im Bereich der an den Schüttkegel angrenzenden Ecken des Sammelbehälters vollständig gefüllt wird, so daß die Kapazität des Sammelbehälters vollständig genutzt wird. Durch die vollständige Nutzung der Kapazität des Sammelbehälters kann auch die Bauhöhe des Sammelbehälters gegen herkömmliche offene Sammelbehälter verringert werden, da bei diesen Sammelbehältern insbesondere die Ecken des Sammelbehälters nicht vollständig mit Erntegut befüllt werden. Hierzu ist es vorteilhaft, daß sich der an die Stirnkante angrenzende vordere Bereich der gegenüberliegenden Wandfortsetzung mit seiner Unterseite auf den beiden oberen Stirnkanten der Seitenteile der einen Wandfortsetzung und mit seiner Oberseite gegen die Unterseite des vorderen Bereichs der einen Wandfortsetzung abstützt.

Nach einem weiteren Merkmal der Erfindung ist es vorteilhaft, daß die beiden Wandfortsetzungen Verlängerungen von Wandteilen des Sammelbehälters sind und daß sie in ihrer oberen Endlagestellung in der gleichen geneigt verlaufenden Ebene wie die Wandteile liegen. Vorteilhaft ist es ferner, daß die Wandfortsetzungen mit der Oberkante des Sammelbehälters ein gleichschenkliges Dreieck bilden, dessen der längsten Seite des Dreiecks gegenüberliegender Winkel in etwa dem Schüttgutwinkel des Erntegutes entspricht.

Eine einwandfreie Führung der Wandfortsetzungen wird auch dadurch gewährleistet, daß die verschwenkbaren Teile des Sammelbehälters, insbesondere die Seitenteile an den Seitenwänden des Sammelbehälters über Führungselemente geführt bzw. mittels Widerlager oder Arretierungselemente in ihrer Endlagestellung festlegbar sind.

Um die Füllhöhe des Erntegutes im Sammelbehälter ohne weiteres zu erfassen, ist es vorteilhaft, daß den verschwenkbaren Teilen des Sammelbehälters ein Meßwertgeber zur Erfassung der Füllmenge des Erntegutes im Sammelbehälter zugeordnet ist, über den Meßwertgrößen an ein am Bedienungsstand vorgesehenes Anzeigegerät übermittelt werden.

Nach einem weiteren Merkmal der Erfindung ist es vorteilhaft, daß der Sammelbehälter über ein Befüllungsorgan mit Erntegut beaufschlagbar ist, dessen Abgabeende außerhalb des Schwenkbereichs der Wandfortsetzungen liegt bzw. aus diesem herausbewegbar ist. Da die Wandfortsetzungen unterhalb der oberen Begrenzung des Sammelbehälters, an die die Wandfortsetzungen angeschlossen sind, verschwenkbar sind, läßt sich auch für Bahnfahrten des Mähdreschers die Gesamthöhe des Mähdreschers auf die für das Bahnprofil erforderliche Höhe auf einfache Weise reduzieren. Hierzu können die Wandfortsetzungen so weit verschwenkt werden, bis sie beispielsweise gegen das obere Ende des Befüllungsorganes bzw. gegen die Seitenwände oder gegen Anschläge zur Anlage kommen, so daß auch in der unteren Stellung der Wandfortsetzungen diese ständig gegeneinander anliegen und gegeneinander geführt sind. Es ist jedoch auch möglich, das Entleerungsrohr bei Verschwenkung der Wandfortsetzungen in ihre obere Lage weiter nach oben zu verstellen, beispielsweise teleskopartig auszuschieben bzw. nach oben zu verschwenken, um eine einwandfreie Befüllung des oberen Raumes des Sammelbehälters zu gewährleisten.

In der Zeichnung wird ein Ausführungsbeispiel eines Sammelbehälters nach der Erfindung schematisch dargestellt. Es zeigt:

Fig. 1 eine Seitenansicht eines Mähdreschers;

Fig. 2 eine perspektivische Darstellung des oberen Teils des Sammelbehälters;

Fig. 3 eine Seitenansicht des oberen Teils des Sammelbehälters, wobei die in gestrichelten Linien dargestellte Stellung eine untere Stellung der Wandfortsetzungen des Sammelbehälters wiedergibt;

Fig. 4 eine Draufsicht gemäß Fig. 3, wobei die gestrichelten Linien verschiedene Schüttkegelkreise wiedergeben.

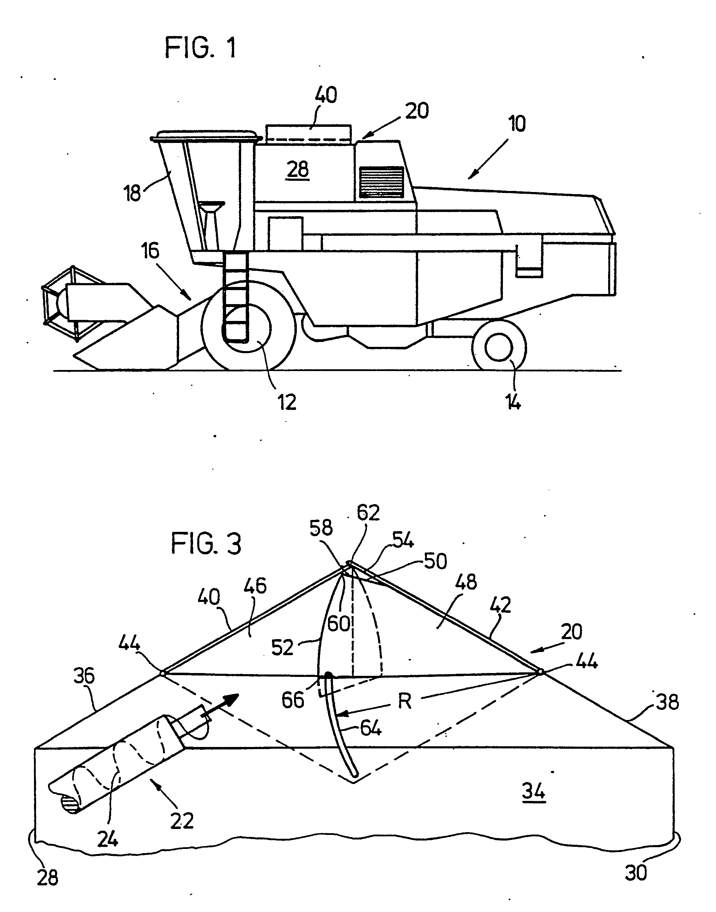

In Fig. 1 der Zeichnung sind mit 10 ein Mähdrescher, mit 12 seine vorderen Laufräder, mit 14 seine hinteren steuerbaren Laufräder, mit 18 seine oberhalb eines Schrägfördergehäuses 16 angeordnete Fahrerkabine und mit 20 sein Sammelbehälter bezeichnet. Letzterer wird über ein Befüllungsorgan 22, das eine Förderschnecke 24 aufweist, befüllt.

Der Sammelbehälter 20 besteht aus einem in der Zeichnung nicht dargestellten Boden, zwei in Fahrtrichtung verlaufenden Seitenwandteilen 28 und 30, einer Vorderwand 32 und einer Rückwand 34.

Der obere Teil des Sammelbehälters 20 ist über eine dachförmige Abdeckvorrichtung verschlossen, die aus zwei geneigt verlaufenden Wandteilen 36 und 38 besteht. Die Wandteile 36 und 38 bilden mit den Seitenwandteilen 28 und 30 eine von oben gesehen rechteckförmige bzw. quadratische Öffnung. An den Wandteil 36 bzw. 38 schließt sich je eine ebenfalls in der gleichen Ebene geneigt verlaufende Wandfortsetzung 40, 42 an, die an die obere Begrenzung des Sammelbehälters, insbesondere an die obere Kante des Wandteiles 36 bzw. 38 über Gelenke 44 schwenkbar angeschlossen ist.

Wie aus Fig. 3 hervorgeht, stützt sich die rechte Wandfortsetzung 42 im Bereich der Stirnkante der linken Wandfortsetzung 40 auf dieser ab. Die rechte Wandfortsetzung 42 kann hierzu etwas länger ausgebildet sein als die linke Wandfortsetzung 40, so daß die beiden Wandfortsetzungen in jeder Stellung ihrer Schwenkphase einander überlappen.

Eine jede Wandfortsetzung 40 bzw. 42 wird durch zwei parallel zueinander verlaufende an die Wandfortsetzung fest angeordnete Seitenteile 46 und 48 begrenzt, die ebenfalls parallel zu der Vorderwand 32 und der Rückwand 34 verlaufen und an diesen vorbeischwenkbar sind. Das rechte Seitenteil 48 weist eine mit Bezug auf die Standfläche des Mähdreschers 10 geneigt verlaufende Oberkante 50 auf, die durch eine annähernd vertikal verlaufende Stirnkante 52 begrenzt wird. Die Oberkante 50 des Seitenteiles 48 bildet mit der Unterseite der Wandfortsetzung 42 eine dreieckförmige Aussparung 58, in die das äußere obere Ende der linken Wandfortsetzung 40 aufgenommen ist. Die Oberkante 50 bildet mit der Stirnkante 52 des mit Bezug auf das Seitenteil 46 außenliegenden Seitenteiles 48 eine Ecke 60, auf die der rechte bzw. linke Außenteil der linken Wandfortsetzung 40 sich abstützt. Das obere Ende der Wandfortsetzung 40 kann dabei mit seiner Stirnkante 62 gegen die Unterseite der rechten Wandfortsetzung 42 so anliegen, daß eine Dichtkante entsteht und der Sammelbehälter 20 über die beiden Wandfortsetzungen 40, 42 ständig verschlossen bleibt. Wie aus Fig. 3 ferner hervorgeht überlappen sich auch die beiden Seitenteile 46 und 48 in jeder Stellung der Wandfortsetzungen 40 und 42, so daß auch der Sammelbehälter 20 im oberen Bereich seitlich ständig verschlossen bleibt. Arbeitet beispielsweise der Mähdrescher 10 in einer Schräglage, so kann es vorkommen, daß der Schüttkegel des Erntegutes nur gegen eine Wandfortsetzung zur Anlage kommt und beim weiteren Anwachsen des Schüttkegels diese Wandfortsetzung nach oben verschwenkt und dabei gleichzeitig die gegenüberliegende Wandfortsetzung mitverschwenkt, da diese durch Anlage der beiden Ecken 60 der Seitenteile 48 gegen die Unterseite der Wandfortsetzung 40 oder durch Anlage der Stirnkante 62 gegen die Unterseite 54 der Wandfortsetzung 42 geführt ist. Durch diese Zwangführung der beiden Wandfortsetzungen 40 und 42 wird in jeder Schwenkphase gewährleistet, daß der Sammelbehälter allseitig verschlossen bleibt, da die eine Wandfortsetzung sich nicht von der anderen Wandfortsetzung wegbewegen kann.

In der Vorderwand 32 und der Rückwand 34 kann eine Schlitzführung 64 vorgesehen sein, die auf einem Radius R liegt und die zur Aufnahme eines Führungselementes 66 dient, das an dem entsprechenden Seitenteil 46 bwz. 48 fest angeordnet ist und die obere und untere Endlagestellung der Wandfortsetzungen 40 und 42 begrenzt. Anstelle des Führungsschlitzes 64 können auch Anschläge bzw. kann eine Hakenleiste im Bereich der Stirnkante der Wandfortsetzung 42 zur Begrenzung der Schwenkbewegung der Wandfortsetzungen 40 und 42 vorgesehen werden, wobei in der oberen Stellung die Stirnkante 62 der einen Wandfortsetzung 40 in die Hakenleiste der anderen Wandfortsetzung 42 einrasten kann.

An den verschwenkbaren Teilen des Sammelbehälters beispielsweise an den Seitenteilen 46, 48 bzw. an den Wandfortsetzungen 40, 42 können zur Erfassung der Füllmenge des Erntegutes im Sammelbehälter Meßwertgeber angeschlossen sein, die die Füllhöhe des Erntegutes im Sammelbehälter erfaßen und diese Meßwertgröße an ein in der Fahrerkabine 18 vorgesehenes Anzeigegerät weiterleitet, so daß die Bedienungsperson ständig über den Befüllungszustand im Sammelbehälter informiert werden kann. Das Anzeigegerät in der Fahrerkabine 18 kann auch als akkustischer Signalgeber ausgebildet sein.

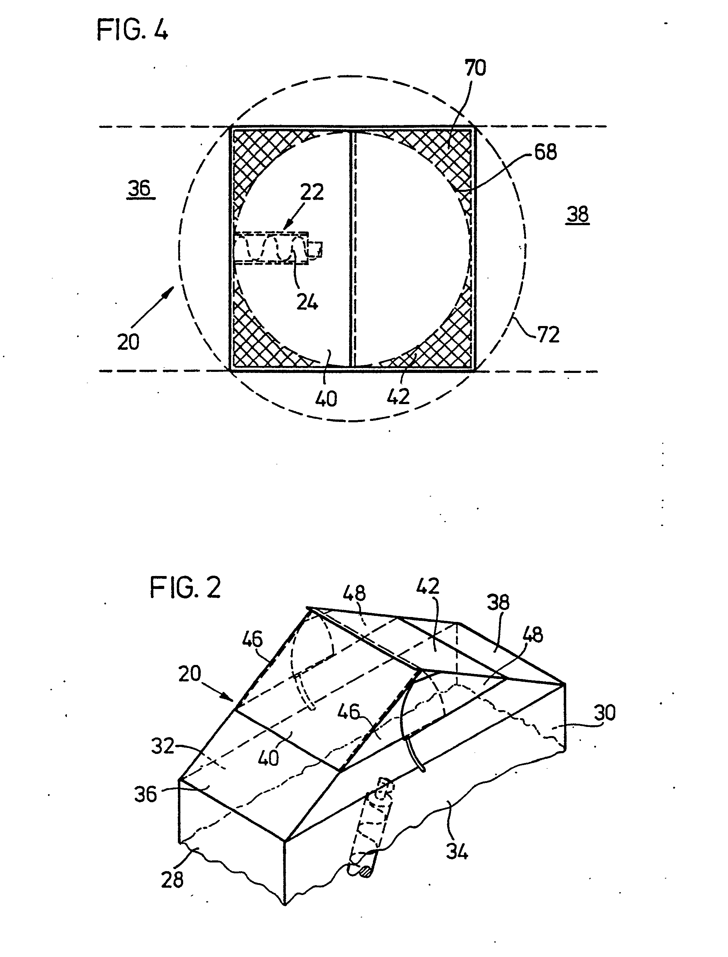

Wie aus Fig. 4 hervorgeht bildet beim Befüllungsvorgang das Erntegut einen Schüttkegel, der bei offenem Sammelbehälter 20 durch den in gestrichelten Linien angedeuteten Kreis 68 angegeben ist. Der durch den Kreis 68 angegebene Schüttkegel kann nicht vergrößert werden, da sonst das Erntegut über die obere Kante des Sammelbehälters 20 ablaufen würde, so daß die im Bereich des Schüttkegels liegenden schraffierten Ecken 70 im Sammelbehälter nicht zur Befüllung des Sammelbehälters genutzt werden können. Wird jedoch die obere Öffnung des Sammelbehälters 20 durch die Wandfortsetzungen 40 und 42 sowie durch die Seitenteile 46 und 48 ständig geschlossen gehalten, so kann der Schüttkegel wesentlich vergrößert werden, der in Fig. 4 durch den Kreis 72 angedeutet ist. Durch die Vergrößerung des Schüttkegels 72, der durch die verschlossene Abdeckung möglich wird, können auch die bisher nicht genutzten Ecken 70 im Sammelbehälter mit Erntegut befüllt werden. Hierdurch läßt sich auf einfache Weise die Kapazität des Sammelbehälters 20 steigern, ohne die Bauhöhe des Sammelbehälters zu vergrößern.

Die im Ausführungsbeispiel gemäß Fig. 2 und 3 an die Wandteile 36 und 38 angeschlossenen Wandfortsetzungen 40 und 42 können auch verlängert werden, beispielsweise bis in den Bereich der Seitenwandteile 28 und 30.

## Patentansprüche

1. Sammelbehälter (20) für eine Erntebergungsmaschine zur Aufnahme von schüttbarem Erntegut, insbesondere für Mähdrescher (10), mit zwei an die obere Begrenzung des Sammelbehälters (20) angeschlossenen, gegenüberliegenden, eine obere Öffnung des Sammelbehälters abdeckenden Wandfortsetzungen (40, 42) zur Vergrößerung des Sammelbehälterinhalts, die seitlich durch zueinander ausgerichtete Seitenteile begrenzt sind, wobei die Wandfortsetzungen (40, 42) zwischen einer unteren Lage und einer oberen Lage verschwenkbar sind, dadurch gekennzeichnet, daß die beiden Wandfortsetzungen (40, 42) und die daran angeschlossenen Seitenteile (46, 48) sich im Bereich ihrer Stirnkanten (62, 52) überlappen und die eine Wandfortsetzung (40, 42) sich gegen die andere Wandfortsetzung anlehnt bzw. abstützt.

2. Sammelbehälter nach Anspruch 1, dadurch gekennzeichnet, daß sich die eine Wandfortsetzung (42) auf der anderen Wandfortsetzung (40) dichtend abstützt.

3. Sammelbehälter nach den Ansprüchen 1 und 2, dadurch gekennzeichnet, daß eine jede Wandfortsetzung (40; 42) durch zwei parallel zueinander verlaufende, mit der jeweiligen Wandfortsetzung verschwenkbare Seitenteile (46; 48) begrenzt ist, wobei die Seitenteile (46) der einen Wandfortsetzung (42) an den Seitenteilen (48) der anderen Wandfortsetzung (40) vorbeischwenkbar sind.

4. Sammelbehälter nach Anspruch 3, dadurch gekennzeichnet, daß die Seitenteile (48, 46) parallel zu den zugeordneten Seitenwandteilen (32, 34) des Sammelbehälters (20) verlaufen und an diesen vorbeischwenkbar sind.

5. Sammelbehälter nach den Ansprüchen 1 und 3, dadurch gekennzeichnet, daß jedes der beiden Seitenteile (46; 48) der einen Wandfortsetzung (42) im Bereich seiner Stirnkante mit der Unterseite (54) dieser Wandfortsetzung (42) eine schlitzförmige oder dreieckförmige Aussparung (58) bildet, die zur Aufnahme der Stirnkante (62) der gegenüberliegenden Wandfortsetzung (40) dient.

6. Sammelbehälter nach Anspruch 5, dadurch gekennzeichnet, daß sich der an die Stirnkante (62) angrenzende vordere Bereich der gegenüberliegenden Wandfortsetzung (40) mit seiner Unterseite auf den beiden oberen Stirnkanten (Ecke 60) der Seitenteile (48) der einen Wandfortsetzung (42) und mit seiner Oberseite gegen die Unterseite (54) des vorderen Bereichs der einen Wandfortsetzung (42) abstützt.

7. Sammelbehälter nach einem oder mehreren der vorherigen Ansprüche, dadurch gekennzeichnet, daß die beiden Wandfortsetzungen (40, 42) Verlängerungen von Wandteilen (36, 38) des Sammelbehälters (20) sind und daß sie in ihrer oberen Endlagestellung in der gleichen geneigt verlaufenden Ebene wie die Wandteile liegen.

8. Sammelbehälter nach einem oder mehreren der vorherigen Ansprüche, dadurch gekennzeichnet, daß die Wandfortsetzungen (40, 42) mit der Oberkante des Sammelbehälters (20) ein gleichschenkliges Dreieck bilden, dessen der längsten Seite des Dreiecks gegenüberliegender Winkel in etwa dem Schüttgutwinkel des Erntegutes entspricht.

9. Sammelbehälter nach einem oder mehreren der vorherigen Ansprüche, dadurch gekennzeichnet, daß die verschwenkbaren Teile des Sammelbehälters (20), insbesondere die Seitenteile (46, 48) an den Seitenwänden (34, 32) des Sammelbehälters über Führungselemente (66) geführt bzw. mittels Widerlager oder Arretierungselemente in ihrer Endlagestellung festlegbar sind.

10. Sammelbehälter nach einem oder mehreren der vorherigen Ansprüche, dadurch gekennzeichnet, daß den verschwenkbaren Teilen des Sammelbehälters (20) ein Meßwertgeber zur Erfassung der Füllmenge des Erntegutes im Sammelbehälter (20) zugeordnet ist, über den Meßwertgrößen an ein am Bedienungsstand vorgesehenes Anzeigegerät übermittelt werden.

11. Sammelbehälter nach einem oder mehreren der vorherigen Ansprüche, dadurch gekennzeichnet, daß der Sammelbehälter (20) über ein Befüllungsorgan (22) mit Erntegut beaufschlagbar ist, dessen Abgabeende außerhalb des Schwenkbereichs der Wandfortsetzungen (40, 42) liegt bzw. aus diesem herausbewegbar ist.

**Claims**

1. Storage tank (20) for a crop gathering machine for receiving pourable harvested material, in particular for a combine harvester (10), having two opposite wall extensions (40, 42) connected to the top boundary of the storage tank (20) and covering a top opening of the tank for increasing the capacity thereof and which are bounded laterally by side portions oriented towards one another, the wall extensions (40, 42) being swingable between a lower position and an upper position, characterised in that the two wall extensions (40, 42) and the side portions (46, 48) connected thereto overlap in the region of their front edges (62, 52) and one wall extension (40, 42) leans or is supported against the other wall extension.

2. Storage tank according to claim 1, characterised in that one wall extension (42) is supported with a sealing action on the other wall extension (40).

3. Storage tank according to claims 1 and 2, characterised in that each wall extension (40; 42) is bounded by two side portions (46; 48) extending parallel to one another and swingable with the respective wall extension, the side portions (46) of one wall extension (42) being swingable past the side portions (48) of the other wall extension (40).

4. Storage tank according to claim 3, characterised in that the side portions (48, 46) extend parallel to the associated side wall parts (32, 34) of the storage tank (20) and can be swung past them.

5. Storage tank according to claims 1 and 3, characterised in that each of the two side portions (46; 48) of one wall extension (42) forms a slit-shaped or triangular opening (58) with the underside (54) of this wall extension (42) in the region of its front edge, this opening serving to accommodate the front edge (62) of the opposite wall extension (40).

6. Storage tank according to claim 5, characterised in that the front zone of the opposite wall extension (40) adjoining the front edge (62) rests at its underside on the two top front edges (corners 60) of the side portions (48) of the one wall extension (42) and at its top against the underside (54) of the front zone of the one wall extension (42).

7. Storage tank according to one or more of the preceding claims, charaeterised in that the two wall extensions (40, 42) are prolongations of wall parts (36, 38) of the storage tank (20) and in their upper end position are located in the same inclined plane as the wall parts.

8. Storage tank according to one or more of the preceding claims, characterised in that the wall extensions (40, 42) form with the top edge of the storage tank (20) an isosceles triangle whose angle located opposite the longest side of the triangle corresponds substantially to the angle of repose of the loose harvested material.

9. Storage tank according to one or more of the preceding claims, characterised in that the swingable parts of the storage tank (20), in particular the side portions (46, 48), are guided on the side walls (34, 32) of the storage tank by means of guide elements (66) or can be secured in their end position by means of abutments or locking elements.

10. Storage tank according to one or more of the preceding claims, characterised in that a measured value pick-up is associated with the swingable parts of the storage tank (20) for detecting the amount of harvested material with which the storage tank (20) is filled, and measured value quantities are transmitted by means of the pick-up to an indicating instrument provided at the operating station.

11. Storage tank according to one or more of the preceding claims, characterised in that the storage tank (20) can be loaded with harvested materialby means of a charging system (22) whose delivery end is located outside the range of swing of the wall extensions (40, 42) or can be moved out of it.

**Revendications**

1°) Réceptacle collecteur formant trémie (20) pour machine de récolte, pour la réception de produits de récolte en vrac, en particulier pour moissonneuse-batteuse (10), comportant deux prolongements de paroi (40, 42) opposés, reliés à la limite supérieure du réceptacle collecteur (20) et recouvrant un orifice supérieur de ce réceptacle collecteur destinés à augmenter la capacité dudit réceptacle, qui sont délimités latéralement par des parties latérales, ces prolongements de paroi (40, 42) pouvant pivoter entre une position inférieure et une position supérieure, caractérisé en ce que les deux prolongements de paroi (40, 42) et les parties latérales (46, 48) s'y raccordant se chevauchent au voisinage de leurs bords frontaux ou terminaux (62, 52), et en ce que l'un des prolongements de paroi (40, 42) s'appuie ou s'adosse contre l'autre prolongement de paroi.

2°) Réceptacle collecteur selon la revendication 1, caractérisé en ce que l'un des prolongements de paroi (42) s'appuie de façon étanche contre l'autre prolongement de paroi (40).

3°) Réceptacle collecteur selon les revendications 1 et 2, caractérisé en ce que chaque prolongement de paroi (40, 42) est délimité par deux parties latérales (46, 48) s'étendant parallèlement entre elles et pouvant pivoter avec le prolongement de paroi correspondant, les parties latérales (46) de l'un des prolongements de paroi (42) pouvant longer en pivotant les parties latérales (48) de l'autre prolongement de paroi (40).

4°) Réceptacle collecteur selon la revendication 3, caractérisé en ce que les parties latérales (48, 46) s'étendent parallèlement aux parties de paroi latérales conjuguées (32, 34) du réceptacle collecteur (20) et peuvent pivoter en les longeant.

5°) Réceptacle collecteur selon les revendications 1 et 3, caractérisé en ce que chacune des deux parties latérales (46, 48) de l'un des prolongements de paroi (42) délimite au voisinage de son bord frontal ou terminal, avec la face inférieure (54) du prolongement de paroi (42), un évidement (68) en forme de fente ou triangulaire qui sert à la réception de l'extrémité avant (bord terminal 62) du prolongement de paroi opposé (40).

6°) Réceptacle collecteur selon la revendication 5, caractérisé en ce que la partie avant contiguë au bord terminal (62) du prolongement de paroi opposé (40) prend appui par sa face inférieure sur les deux bords terminaux supérieurs (angle 60) des parties latérales (48) du prolongement de paroi (42) et, par sa face supérieure, contre la face inférieure (54) de la partie avant du prolongement de paroi (42).

7°) Réceptacle collecteur selon une ou plusieurs des revendications précédentes, caractérisé en ce que les deux prolongements de paroi (40, 42) sont des prolongements de parties de parois (36, 38) du réceptacle collecteur (20), et en ce qu'ils se trouvent, dans leur position supérieure limite ou terminale, dans le même plan incliné que ces parties de parois.

8°) Réceptacle collecteur selon une ou plusieurs des revendications précédentes, caractérisé en ce que les prolongements de parois (40, 42) forment, avec le bord supérieur du réceptacle collecteur (20), un triangle isocèle dont l'angle opposé au plus grand côté dudit triangle correspond sensiblement à l'angle de déversement des produits de récolte.

9°) Réceptacle collecteur selon une ou plusieurs des revendications précédentes, caractérisé en ce que les parties pivotantes du réceptacle collecteur (20), en particulier les parties latérales (46, 48), sont guidées sur les parois latérales (34, 32) du réceptacle collecteur par l'intermédiaire d'éléments de guidage (66), ou bien peuvent être immobilisés au moyen de portées ou d'éléments de blocage dans leur position terminale.

10°) Réceptacle collecteur selon une ou plusieurs des revendications précédentes, caractérisé en ce qu'il est prévu, en combinaison avec les parties pivotantes du réceptacle collecteur (20), un émetteur ou transmetteur de valeurs de mesure, pour détecter le degré de remplissage du réceptacle collecteur (20) avec les produits de récolte, par lequel des grandeurs de mesure sont transmises à un appareil indicateur prévu au poste de conduite.

11°) Réceptacle collecteur selon une ou plusieurs des revendications précédentes, caractérisé en ce que le réceptacle collecteur (20) peut être alimenté en produtis de récolte par un organe de remplissage (22) dont l'extrémité de sortie se trouve à l'extérieur de la trajectoire de pivotement des prolongements de paroi (40, 42), ou bien être amené par déplacement à l'extérieur de celle-ci.

# FIG. 1

# FIG. 3

FIG. 4

FIG. 2